# EUROPEAN PATENT APPLICATION

(11) **EP 4 637 220 A1**
(43) Date of publication of application: **22.10.2025**
(21) Application number: 23902475.5
(22) Date of filing: 27.11.2023
(51) Int. Cl.: H04W 52/02

(54) **METHOD AND DEVICE USED IN NODE FOR WIRELESS COMMUNICATION**

(30) Priority: 14.12.2022 CN 202211610469
(71) Applicant: SHANGHAI LANGBO COMMUNICATION TECHNOLOGY COMPANY LIMITED, Shanghai 200240 (CN)
(72) Inventor: JIANG, Qi, Shanghai 201206 (CN); ZHANG, Xiaobo, Shanghai 201206 (CN)
(74) Representative: Gunzelmann, Rainer
(86) International application number: PCT/CN2023/134210
(87) International publication number: WO 2024/125277

(57) **Abstract**

The present application discloses a method and device used in a node for wireless communication. A node first receives first signaling, the first signaling being used for determining a first RE pool;then receives target signaling, the target signaling being used for triggering or canceling PDCCH detection in at least one PDCCH monitoring moment; and receives first DCI and a first channel, wherein the first DCI is used for scheduling the first channel, the first signaling comprises at least one of configuration signaling of at least one search space set or a rate matching scheme, the target signaling is L1/L2 signaling, whether the first channel occupies the target RE set depends on the target signaling, and the target RE set comprises REs of the first RE pool in one of the at least one PDCCH monitoring moment. The present application improves the confirmation of resources occupied by scheduling data in an energy saving scenario, thereby improving the overall performance of a system.

## Description

### Technical Field

The present application relates to a transmission method and device in a wireless communication system, particularly relates to a transmission scheme and device of a data channel in wireless communication.

### Background Art

Among new research topics of 5G wireless cellular communication network system (5G-RAN) Release 18, network energy saving begins to be discussed as a new research topic at an access layer. Compared with terminal-side energy saving solutions designed in previous Release 16 and Release 17, network energy saving involves more energy saving on a base station side. An important aspect of energy saving on the base station side is to reduce a transmission frequency of broadcast signaling and system messages, so as to reduce energy consumption.

### Summary of the Invention

Currently, in a network energy saving topic, several main ways to reduce energy consumption on the base station side are being discussed, including schemes such as PSS (Primary Synchronization Signal)/SSS (Secondary Synchronization Signal), excluding PBCH (Physical Broadcast Channel), PSS/SSS including part of PBCH, and SSB (SS/PBCH Block)/SIB1 (System Information Block 1) that reduces the transmission density. At the same time, a base station can enable and disable transmissions of these broadcast and system messages through dynamic signaling to more flexibly achieve the effect of reducing energy consumption. However, since the above broadcast and system messages are generally not configured through high-layer signaling dedicated to UE (User Equipment) and are common to a cell, and dynamic signaling itself is triggered faster than the high-layer signaling, whether the above broadcast and system messages as well as control signaling corresponding to the system messages are transmitted will affect the rate match of a data channel.

In view of the above-mentioned problems of data channel configuration and reception under network energy saving, the present application discloses a solution. It should be noted that in the description of the present application, network energy saving is only used as a typical application scenario or example; and the present application is also applicable to other scenarios facing similar problems, e.g., non-network energy saving scenarios, or for different technical fields, such as other technical fields other than data channel reception, e.g., measurement reporting fields, control channel transmission fields and other technical fields, to achieve similar technical effects. In addition, adopting a unified solution in different scenarios (including but not limited to network energy saving scenarios) can also help reduce hardware complexity and costs. In the case of no conflict, embodiments and features in the embodiments in any node of the present application can be applied to any other node. In the absence of conflicts, the embodiments and features in the embodiments of the present application may be arbitrarily combined with each other. In particular, the interpretation of the terminologies, nouns, functions, and variables in the present application (if not specifically noted) can refer to the definitions in the specification protocols TS36 series, TS38 series, and TS37 series of 3GPP. If necessary, 3GPP standards TS38.211, TS38.212, TS38.213, TS38.214, TS38.215, TS38.321, TS38.331, TS38.305, and TS37.355 can be referred to for assisting in understanding the present application.

The present application discloses a method used in a first node for wireless communication, comprising:
receiving first signaling, the first signaling being used for determining a first RE (Resource Element) pool;
receiving target signaling, the target signaling being used for triggering PDCCH (Physical Downlink Control Channel) detection in at least one PDCCH monitoring occasion, or canceling PDCCH detection in at least one PDCCH monitoring occasion;
and receiving first DCI (Downlink Control Information) and receiving a first channel,
wherein the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC (Medium Access Control) CE (Control Element); the target signaling is common to a cell or is common to a UE group; and whether the first channel occupies a target RE set depends on the target signaling, and the target RE set comprises REs of the first RE pool in one of the at least one PDCCH monitoring occasion.

As one embodiment, the above method is characterized in that: the size of a time-frequency resource actually occupied by a data channel is more flexibly determined by first signaling, so as to avoid inconsistent understanding of the time-frequency resource occupied by a transmission as a base station enables an energy saving mode.

As one embodiment, the above method is characterized in that: a time-frequency resource in the first RE pool is dynamically occupied, thereby ensuring that a resource reserved for transmitting system information and broadcast information can be used by unicast scheduling when they are released due to energy saving, thereby improving the spectrum efficiency.

According to one aspect of the present application, the first DCI is used for determining a first RE set, the first RE set is related to a second RE set, and the first channel occupies the second RE set; and resource mapping of the first channel to the second RE set is independent of the target signaling.

As one embodiment, the above method is characterized in that: regardless of whether the target RE set is occupied, a manner of mapping the first channel into the second RE set remains unchanged, and regardless of whether the first node correctly receives the target signaling, it will not affect at least the reception of the first channel in the second RE set, thereby ensuring the reception performance of the first channel.

According to one aspect of the present application, when the target signaling is used for triggering PDCCH detection in the at least one PDCCH monitoring occasion, the first channel does not occupy the target RE set; and when the target signaling is used for canceling PDCCH detection in the at least one PDCCH monitoring occasion, the first channel occupies the target RE set.

As one embodiment, the above method is characterized in that: when a base station determines to enter an energy saving mode through target signaling, that is, to reduce the transmission density of broadcast and system information, the above resource reserved for broadcast and system information can be released for the transmission of a data channel; and when the base station enables the transmission of normal-density broadcast and system information through target signaling again, the above resource reserved for broadcast and system information can no longer be used for the transmission of a data channel.

According to one aspect of the present application, the first signaling is used for indicating K1 rate match schemes, the K1 being a positive integer greater than 1; a target rate match pattern is related to one of the K1 rate match schemes; the target rate match pattern is a first rate match pattern or a second rate match pattern, and whether the target rate match pattern is the first rate match pattern or the second rate match pattern depends on the target signaling; a time domain resource occupied by the target signaling is prior to a time domain resource occupied by the first channel; and the first rate match pattern is used for determining the target RE set, and the second rate match pattern is not used for determining the target RE set.

As one embodiment, the above method is characterized in that: an existing manner of indicating a rate match pattern through dynamic signaling is maintained to ensure forward compatibility.

According to one aspect of the present application, the K1 rate match schemes correspond to K1 indexes, the target rate match pattern is related to a target rate match scheme in the K1 rate match schemes, the first signaling comprises a first parameter group and a second parameter group, and the first parameter group and the second parameter group are respectively used for determining the first rate match pattern and the second rate match pattern.

As one embodiment, the above method is characterized in that: one rate match pattern ID corresponds to two rate match patterns, and which pattern is specifically adopted is related to an indication of the target signaling.

According to one aspect of the present application, the K1 rate match schemes correspond to K1 rate match pattern groups, the target rate match pattern is related to a target rate match pattern group in the K1 rate match pattern groups, and the target rate match pattern group comprises the first rate match pattern and the second rate match pattern; and the first rate match pattern and the second rate match pattern both correspond to a cell level, or the first rate match pattern and the second rate match pattern both correspond to a BWP (Bandwidth Part) level.

As one embodiment, the above method is characterized in that: one rate match pattern group comprises two cell-level rate match patterns or two BWP-level rate match patterns, and which pattern is specifically adopted is related to an indication of the target signaling.

According to one aspect of the present application, the first DCI comprises a first field, the first field included in the first DCI is used for determining a target rate match scheme from the K1 rate match schemes, and the target rate match pattern is related to the target rate match scheme.

According to one aspect of the present application, a first search space set is used for determining the first rate match pattern, and a second search space set is used for determining the second rate match pattern; and the first search space set is different from the second search space set.

According to one aspect of the present application, it comprises:
sending a first signal,
wherein the first signal is used for indicating information of the first node, and the first signal is related to the target signaling.

As one embodiment, the above method is characterized in that: sending of the target signaling is triggered by the first signal to achieve more flexible configuration and application of a search space set.

The present application discloses a method used in a second node for wireless communication, comprising:
sending first signaling, the first signaling being used for determining a first RE pool; sending target signaling, the target signaling being used for triggering PDCCH detection in at least one PDCCH monitoring occasion, or canceling PDCCH detection in at least one PDCCH monitoring occasion; and sending first DCI and sending a first channel,
wherein the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies the target RE set depends on the target signaling, and the target RE set comprises REs of the first RE pool in one of the at least one PDCCH monitoring occasion.

According to one aspect of the present application, the first DCI is used for determining a first RE set, the first RE set is related to a second RE set, and the first channel occupies the second RE set; and resource mapping of the first channel to the second RE set is independent of the target signaling.

According to one aspect of the present application, when the target signaling is used for triggering PDCCH detection in the at least one PDCCH monitoring occasion, the first channel does not occupy the target RE set; and when the target signaling is used for canceling PDCCH detection in the at least one PDCCH monitoring occasion, the first channel occupies the target RE set.

According to one aspect of the present application, the first signaling is used for indicating K1 rate match schemes, the K1 being a positive integer greater than 1; a target rate match pattern is related to one of the K1 rate match schemes; the target rate match pattern is a first rate match pattern or a second rate match pattern, and whether the target rate match pattern is the first rate match pattern or the second rate match pattern depends on the target signaling; a time domain resource occupied by the target signaling is prior to a time domain resource occupied by the first channel; and the first rate match pattern is used for determining the target RE set, and the second rate match pattern is not used for determining the target RE set.

According to one aspect of the present application, the K1 rate match schemes correspond to K1 indexes, the target rate match pattern is related to a target rate match scheme in the K1 rate match schemes, the first signaling comprises a first parameter group and a second parameter group, and the first parameter group and the second parameter group are respectively used for determining the first rate match pattern and the second rate match pattern.

According to one aspect of the present application, the K1 rate match schemes correspond to K1 rate match pattern groups, the target rate match pattern is related to a target rate match pattern group in the K1 rate match pattern groups, and the target rate match pattern group comprises the first rate match pattern and the second rate match pattern; and the first rate match pattern and the second rate match pattern both correspond to a cell level, or the first rate match pattern and the second rate match pattern both correspond to a BWP level.

According to one aspect of the present application, the first DCI comprises a first field, the first field included in the first DCI is used for determining a target rate match scheme from the K1 rate match schemes, and the target rate match pattern is related to the target rate match scheme.

According to one aspect of the present application, a first search space set is used for determining the first rate match pattern, and a second search space set is used for determining the second rate match pattern; and the first search space set is different from the second search space set.

According to one aspect of the present application, it comprises:
receiving a first signal,
wherein the first signal is used for indicating information of the first node, and the first signal is related to the target signaling.

The present application discloses a first node for wireless communication, comprising:
a first receiver for receiving first signaling, the first signaling being used for determining a first RE pool; receiving target signaling, the target signaling being used for triggering PDCCH detection in at least one PDCCH monitoring occasion, or canceling PDCCH detection in at least one PDCCH monitoring occasion; and receiving first DCI and receiving a first channel,
wherein the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies the target RE set depends on the target signaling, and the target RE set comprises REs of the first RE pool in one of the at least one PDCCH monitoring occasion.

The present application discloses a second node for wireless communication, comprising:
a second transmitter for sending first signaling, the first signaling being used for determining a first RE pool; sending target signaling, the target signaling being used for triggering PDCCH detection in at least one PDCCH monitoring occasion, or canceling PDCCH detection in at least one PDCCH monitoring occasion; and sending first DCI and sending a first channel,
wherein the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies the target RE set depends on the target signaling, and the target RE set comprises REs of the first RE pool in one of the at least one PDCCH monitoring occasion.

As one embodiment, the benefit of the solution in the present application lies in: optimizing a configuration and transmission manner of a data channel in a network energy saving scenario to improve the spectrum efficiency and avoid resource waste.

### Brief Description of the Drawings

Other features, purposes and advantages of the present application will become more apparent from reading the detailed description of the non-limiting embodiments made with reference to the following figures:
FIG. 1 shows a processing flowchart of a first node according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of first signaling according to one embodiment of the present application;
FIG. 6 shows a flowchart of a first signal according to one embodiment of the present application;
FIG. 7 shows a schematic diagram of a first RE pool according to one embodiment of the present application;
FIG. 8 shows a schematic diagram of a second RE set according to one embodiment of the present application;
FIG. 9 shows a schematic diagram of the second RE set according to another embodiment of the present application;
FIG. 10 shows a structural block diagram of a processing device in a first node device according to one embodiment of the present application; and
FIG. 11 shows a structural block diagram of a processing device in a second node device according to one embodiment of the present application.

### Detailed Description of Embodiments

The technical solution of the present application will be further described in detail below in conjunction with the drawings. It should be noted that, in the case of no conflict, embodiments and the features in the embodiments of the present application can be arbitrarily combined with each other.

### Embodiment 1

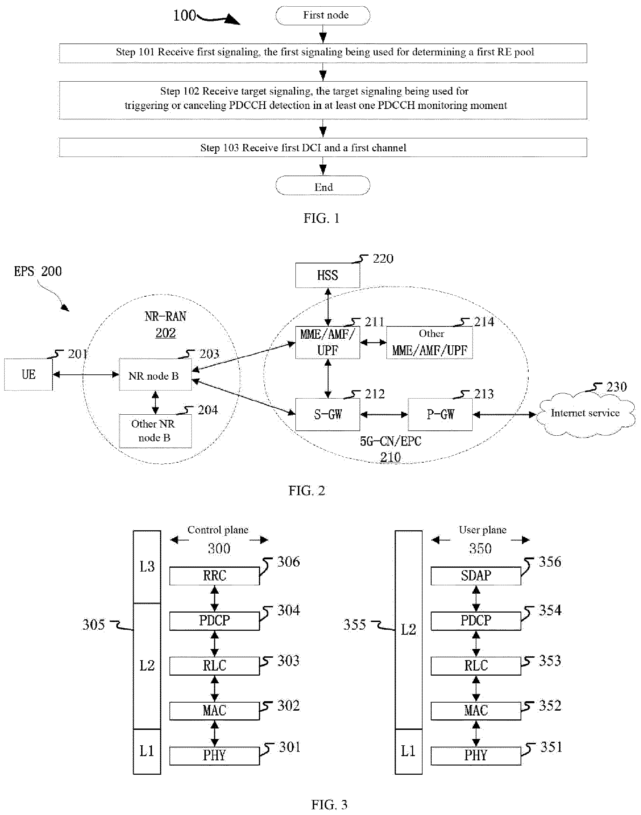

Embodiment 1 illustrates one processing flowchart of a first node, as shown in FIG. 1. In 100 shown in FIG. 1, each box represents one step. In Embodiment 1, a first node in the present application, in step 101, receives first signaling, the first signaling being used for determining a first RE pool; in step 102, receives target signaling, the target signaling being used for triggering PDCCH detection in at least one PDCCH monitoring occasion, or canceling PDCCH detection in at least one PDCCH monitoring occasion; and in step 103, receives first DCI and receives a first channel.

In Embodiment 1, the first DCI is used for scheduling the first channel;the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies the target RE set depends on the target signaling, and the target RE set comprises REs of the first RE pool in one of the at least one PDCCH monitoring occasion.

As one embodiment, the first signaling comprises an MIB (Master Information Block).

As one embodiment, the first signaling comprises an SIB (System Information Block).

As one embodiment, the first signaling comprises SSB.

As one embodiment, the first signaling comprises a synchronization signal.

As one embodiment, the first signaling is transmitted through RRC (Radio Resource Control) signaling.

As one embodiment, the first signaling comprises a PDCCH-ConfigSIB1 IE (Information Element) in TS 38.331.

As one embodiment, a name of RRC signaling bearing the first signaling comprises PDCCH.

As one embodiment, a name of RRC signaling bearing the first signaling comprises Config.

As one embodiment, a name of RRC signaling bearing the first signaling comprises SIB.

As one embodiment, the first signaling is used for configuring at least one search space set.

As one embodiment, the first signaling is used for indicating a time domain resource occupied by at least one search space set.

As one embodiment, the first signaling is used for determining a time domain resource occupied by at least one search space set.

As one embodiment, the first signaling is used for configuring a CORESET (Control Resource Set) associated with at least one search space set.

As one embodiment, the first signaling is used for indicating a frequency domain resource occupied by a CORESET associated with at least one search space set and a time domain resource occupied in one slot.

As one embodiment, the first signaling is used for determining a frequency domain resource occupied by a CORESET associated with at least one search space set and a time domain resource occupied in one slot.

As one embodiment, the first RE pool occupies L1 time domain resource sets in a time domain, and the L1 time domain resource sets correspond to L1 time domain resource sets occupied by at least one search space set in the time domain, and the L1 is a positive integer greater than 1.

As one sub-embodiment of this embodiment, any time domain resource set in the L1 time domain resource sets occupies a positive integer number of multi-carrier symbols.

As one sub-embodiment of this embodiment, any time domain resource set in the L1 time domain resource sets occupies 1 slot.

As one embodiment, the first RE pool occupies L2 subcarriers in a frequency domain, and the L2 subcarriers correspond to L2 subcarriers occupied by at least one CORESET.

As one embodiment, an Inter-Slot time domain resource occupied by the first RE pool corresponds to a time domain resource corresponding to at least one search space set.

As one embodiment, an Intra-Slot time domain resource and frequency domain resource occupied by the first RE pool correspond to a time domain resource and a frequency domain resource corresponding to at least one CORESET.

As one embodiment, the first signaling is associated to at least one CSS (Common Search Space).

As one embodiment, the first RE pool is associated to at least one CSS.

As one embodiment, the first RE pool occupies a positive integer number of REs, the positive integer being greater than 1.

As one embodiment, the first signaling is common to a cell.

As one embodiment, the first signaling is transmitted by a UE group, and the UE group comprises a positive integer number of UEs, the positive integer being greater than 1.

As one embodiment, the target signaling comprises DCI.

As one embodiment, the target signaling comprises a MAC CE.

As one embodiment, the target signaling is common to a cell.

As one embodiment, the target signaling is common to a UE group, and the UE group comprises a positive integer number of UEs, the positive integer being greater than 1.

As one embodiment, the target signaling is used for enabling an Energy Saving mode.

As one embodiment, the target signaling is used for triggering PDCCH detection in at least one PDCCH monitoring occasion.

As one sub-embodiment of this embodiment, when the target signaling is used for triggering the PDCCH detection in the at least one PDCCH monitoring occasion, the first channel does not occupy the target RE set.

As one embodiment, the target signaling is used for canceling PDCCH detection in at least one PDCCH monitoring occasion.

As one sub-embodiment of this embodiment, when the target signaling is used for canceling the PDCCH detection in the at least one PDCCH monitoring occasion, the first channel occupies the target RE set.

As one embodiment, the target signaling is used for triggering PDCCH detection in multiple PDCCH monitoring occasions.

As one embodiment, the target signaling is used for canceling PDCCH detection in multiple PDCCH monitoring occasions.

As one embodiment, a physical layer channel occupied by the first DCI comprises a PDCCH.

As one embodiment, the first DCI is used for indicating the first channel.

As one embodiment, the first DCI is used for scheduling at least one bit block, and the at least one bit block is transmitted in the first channel.

As one sub-embodiment of this embodiment, a modulation symbol generated by the at least one bit block is transmitted through the first channel.

As one embodiment, the first DCI is used for scheduling at least one TB (Transport Block), and the at least one TB is transmitted in the first channel.

As one sub-embodiment of this embodiment, a modulation symbol generated by the at least one TB is transmitted through the first channel.

As one embodiment, the first channel comprises a PDSCH (Physical Downlink Shared Channel).

As one embodiment, the first channel comprises a DL-SCH (Downlink Shared Channel).

As one embodiment, the first DCI is used for indicating a time domain resource and a frequency domain resource reserved for transmitting the first channel.

As one embodiment, the first DCI is used for indicating an MCS (Modulation and Coding Scheme) correspondingly adopted for the first channel.

As one embodiment, the first DCI is used for indicating a HARQ (Hybrid Automatic Repeat reQuest) process number correspondingly adopted for the first channel.

As one embodiment, the first signaling comprises configuration signaling of at least one search space set.

As one embodiment, the first signaling comprises a rate match scheme.

As one embodiment, the first signaling comprises configuration signaling of at least one search space set and a rate match scheme simultaneously.

As one embodiment, the target RE set overlaps with an RE set reserved for a transmission of the first channel indicated by the first signaling in a time domain.

As one embodiment, an RE set reserved for a transmission of the first channel indicated by the first signaling comprises the target RE set.

As one embodiment, an RE set reserved for a transmission of the first channel indicated by the first signaling overlaps with the target RE set.

As one embodiment, a time domain resource occupied by the target RE set is after a time domain resource occupied by the target signaling.

As one embodiment, a time domain resource occupied by the target RE set is after a time domain resource occupied by the first DCI.

As one embodiment, a time domain resource occupied by the target RE set is not earlier than a time domain resource occupied by the first DCI.

### Embodiment 2

Embodiment 2 illustrates a schematic diagram of a network architecture, as shown in FIG. 2.

FIG. 2 illustrates a diagram of a network architecture 200 for 5G NR, LTE (Long-Term Evolution) and LTE-A (Long-Term Evolution Advanced) systems. The 5G NR or LTE network architecture 200 may be referred to as an EPS (Evolved Packet System) 200 or some other suitable terminologies. The EPS 200 may comprise one piece of UE (User Equipment) 201, an NR-RAN (Next Generation Radio Access Network) 202, an EPC (Evolved Packet Core)/5G-CN (5G-Core Network) 210, an HSS (Home Subscriber Server) 220, and an Internet Service 230. The EPS may be interconnected with other access networks, but these entities/interfaces are not shown for simplicity. As shown in the figure, the EPS provides packet switching services, however, those skilled in the art will readily appreciate that the various concepts presented throughout the present application may be extended to networks providing circuit switching services or other cellular networks. The NR-RAN comprises an NR Node B (gNB) 203 and other gNB204. The gNB203 provides user and control plane protocol terminations toward the UE201. The gNB203 may be connected to other gNB204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmit Receive Point), or some other suitable terminologies. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminology. The gNB203 is connected to the EPC/5G-CN 210 via an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes signaling between the UE201 and the EPC/5G-CN 210. Generally, the MME/AMF/UPF211 provides bearer and connection management. All user IP (Internet Protocol) packets are transmitted through the S-GW212, and the S-GW212 is itself connected to the P-GW213. The P-GW213 provides UE IP address allocation and other functions. The P-GW213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to the first node in the present application.

As one embodiment, the UE201 supports Energy Saving.

As one embodiment, the UE201 supports dynamically triggering a base station to enter an energy saving mode.

As one embodiment, the UE201 supports dynamically disabling a reception for some broadcast channel and system information.

As one embodiment, the NR node B corresponds to the second node in the present application.

As one embodiment, the NR Node B supports Energy Saving.

As one embodiment, the NR Node B supports dynamically entering an energy saving mode.

As one embodiment, the NR Node B supports dynamically disabling sending of some broadcast channel and system information.

As one embodiment, the NR node B is one base station.

As one embodiment, the NR node B is one cell.

As one embodiment, the NR node B comprises a plurality of cells.

As one embodiment, the first node in the present application corresponds to the UE201, and the second node in the present application corresponds to the NR node B.

### Embodiment 3

Embodiment 3 shows a schematic diagram of an embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 between a first communication node device (UE, a gNB or an RSU in V2X) and a second communication node device (a gNB, UE or an RSU in V2X) using three layers: a Layer 1, a Layer 2, and a Layer 3. The Layer 1 (L1 layer) is the lowest layer and implements various PHY (physical layer) signal processing functions. The L1 layer will be referred to as PHY301 herein. The Layer 2 (L2 layer) 305 is above the PHY301 and is responsible for the link between the first communication node device and the second communication node device through the PHY301. The L2 layer 305 comprises a MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearers and logical channels. The PDCP sublayer 304 also provides security by encrypting data packets, and the PDCP sublayer 304 also provides inter-cell mobility support of the first communication node device to the second communication node device. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as the corresponding layers and sublayers in the control plane 300 for a physical layer 351, a PDCP sublayer 354 in the L2 layer 355, an RLC sublayer 353 in the L2 layer 355, and a MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS flows and data radio bearers (DRBs) to support the diversity of services. Although not shown in the figure, the first communication node device may have several upper layers above the L2 layer 355, comprising a network layer (e.g., an IP layer) terminating at the P-GW on the network side and an application layer terminating at the other end of the connection (e.g., remote UE and a server, etc.).

As one embodiment, the radio protocol architecture in FIG. 3 is applicable to the first node in the present application.

As one embodiment, the radio protocol architecture in FIG. 3 is applicable to the second node in the present application.

As one embodiment, the PDCP304 of the second communication node device is used for generating the scheduling of the first communication node device.

As one embodiment, the PDCP354 of the second communication node device is used for generating the scheduling of the first communication node device.

As one embodiment, the first signaling is generated at the RRC306.

As one embodiment, the first signaling is generated at the MAC302 or MAC352.

As one embodiment, the first signaling is generated at the PHY301 or the PHY351.

As one embodiment, the target signaling is generated at the MAC302 or MAC352.

As one embodiment, the target signaling is generated at the PHY301 or the PHY351.

As one embodiment, the first DCI is generated in the PHY301 or the PHY351.

As one embodiment, a signal transmitted by the first channel is generated at the RRC306.

As one embodiment, a signal transmitted by the first channel is generated at the MAC302 or MAC352.

As one embodiment, a signal transmitted by the first channel is generated at the PHY301 or the PHY351.

As one embodiment, a signal transmitted by the first channel comprises a wireless signal.

As one embodiment, a signal transmitted by the first channel comprises a baseband signal.

As one embodiment, the first signal is generated at the MAC302 or MAC352.

As one embodiment, the first signal is generated at the RRC306.

As one embodiment, the first signal is generated at the PHY301 or the PHY351.

As one embodiment, the first node is one terminal.

As one embodiment, the first node is one relay.

As one embodiment, the second node is one relay.

As one embodiment, the second node is one base station.

As one embodiment, the second node is one gNB.

As one embodiment, the second node is one TRP (Transmitter Receiver Point).

As one embodiment, the second node is used for managing a plurality of TRPs.

As one embodiment, the second node is a node for managing a plurality of cells.

As one embodiment, the first signal comprises a wireless signal.

As one embodiment, the first signal comprises a baseband signal.

### Embodiment 4

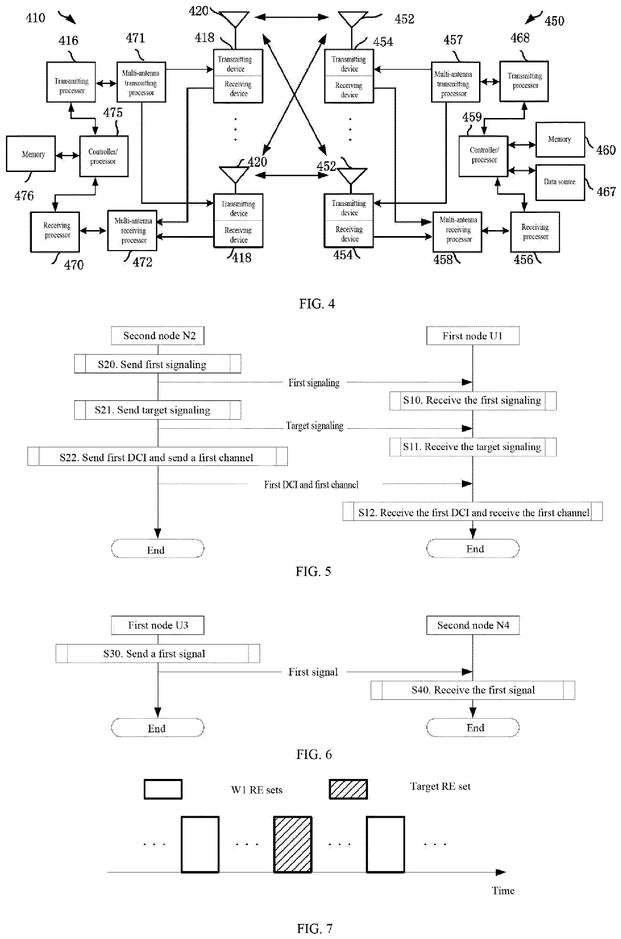

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In a transmission from the second communication device 410 to the first communication device 450, at the second communication device 410, upper-layer data packets from a core network are provided to the controller/processor 475. The controller/processor 475 implements the functionality of the L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for the L1 layer (i.e., physical layer). The transmitting processor 416 implements coding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the encoded and modulated symbols to generate one or more spatial stream(s). The transmitting processor 416 then maps each spatial stream to a subcarrier, multiplexes the each spatial stream with a reference signal (e.g., pilot frequency) in a time domain and/or frequency domain, and then uses an inverse fast Fourier transform (IFFT) to generate a physical channel carrying a time-domain multi-carrier symbol stream. The multi-antenna transmitting processor 471 then performs a transmitting analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operation. In the frequency domain, the physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the first communication device 450. The symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the second communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements the functions of the L2 layer for the user plane and the control plane. The controller/processor 459 is also responsible for retransmission of lost packets and signaling to the second communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced spatial stream into a multi-carrier/single-carrier symbol stream, which is provided to different antennas 452 by the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the function of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from the UE450. The upper-layer data packets from the controller/processor 475 may be provided to the core network.

As one embodiment, the first communication device 450 apparatus comprises: at least one processor and at least one memory, the at least one memory comprising computer program codes, wherein the at least one memory and the computer program code are configured to be used together with the at least one processor, and the first communication device 450 apparatus at least: first receives first signaling, the first signaling being used for determining a first RE pool; then receives target signaling, the target signaling being used for triggering PDCCH detection in at least one PDCCH monitoring occasion, or canceling PDCCH detection in at least one PDCCH monitoring occasion; and receives first DCI and receives a first channel, wherein the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies the target RE set depends on the target signaling, and the target RE set comprises REs of the first RE pool in one of the at least one PDCCH monitoring occasion.

As one embodiment, the first communication device 450 comprises: a memory storing a computer-readable instruction program, the computer-readable instruction program, when executed by at least one processor, generating an action, and the action comprising: first receiving first signaling, the first signaling being used for determining a first RE pool; then receiving target signaling, the target signaling being used for triggering PDCCH detection in at least one PDCCH monitoring occasion, or canceling PDCCH detection in at least one PDCCH monitoring occasion; and receiving first DCI and receiving a first channel, wherein the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies the target RE set depends on the target signaling, and the target RE set comprises REs of the first RE pool in one of the at least one PDCCH monitoring occasion.

As one embodiment, the second communication device 410 apparatus comprises: at least one processor and at least one memory, the at least one memory comprising computer program codes, wherein the at least one memory and the computer program codes are configured to be used together with the at least one processor. The second communication device 410 apparatus at least: first sends first signaling, the first signaling being used for determining a first RE pool; then sends target signaling, the target signaling being used for triggering PDCCH detection in at least one PDCCH monitoring occasion, or canceling PDCCH detection in at least one PDCCH monitoring occasion; and sends first DCI and sends a first channel, wherein the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies the target RE set depends on the target signaling, and the target RE set comprises REs of the first RE pool in one of the at least one PDCCH monitoring occasion.

As one embodiment, the second communication device 410 apparatus comprises: a memory storing a computer-readable instruction program, the computer-readable instruction program, when executed by at least one processor, generating an action, and the action comprising: first sending first signaling, the first signaling being used for determining a first RE pool; then sending target signaling, the target signaling being used for triggering PDCCH detection in at least one PDCCH monitoring occasion, or canceling PDCCH detection in at least one PDCCH monitoring occasion; and sending first DCI and sending a first channel, wherein the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies the target RE set depends on the target signaling, and the target RE set comprises REs of the first RE pool in one of the at least one PDCCH monitoring occasion.

As one embodiment, the first communication device 450 corresponds to the first node in the present application.

As one embodiment, the second communication device 410 corresponds to the second node in the present application.

As one embodiment, the first communication device 450 is a piece of UE.

As one embodiment, the first communication device 450 is one terminal.

As one embodiment, the first communication device 450 is one relay.

As one embodiment, the second communication device 410 is one base station.

As one embodiment, the second communication device 410 is one relay.

As one embodiment, the second communication device 410 is one network device.

As one embodiment, the second communication device 410 is one servicing cell.

As one embodiment, the second communication device 410 is one TRP.

As one embodiment, at least the first four of the antenna 452, the receiving device 454, the multi-antenna receiving processor 458, the receiving processor 456, and the controller/processor 459 are used for receiving first signaling;and at least the first four of the antenna 420, the transmitting device 418, the multi-antenna transmitting processor 471, the transmitting processor 416, and the controller/processor 475 are used for sending first signaling.

As one embodiment, at least the first four of the antenna 452, the receiving device 454, the multi-antenna receiving processor 458, the receiving processor 456, and the controller/processor 459 are used for receiving target signaling;and at least the first four of the antenna 420, the transmitting device 418, the multi-antenna transmitting processor 471, the transmitting processor 416, and the controller/processor 475 are used for sending target signaling.

As one embodiment, at least the first four of the antenna 452, the receiving device 454, the multi-antenna receiving processor 458, the receiving processor 456, and the controller/processor 459 are used for receiving first DCI and receiving a first channel;and at least the first four of the antenna 420, the transmitting device 418, the multi-antenna transmitting processor 471, the transmitting processor 416, and the controller/processor 475 are used for sending the first DCI and sending the first channel.

As one embodiment, at least the first four of the antenna 452, the transmitting device 454, the multi-antenna transmitting processor 457, the transmitting processor 468, and the controller/processor 459 are used for sending a first signal; and at least the first four of the antenna 420, the receiving device 418, the multi-antenna receiving processor 472, the receiving processor 470, and the controller/processor 475 are used for receiving the first signal.

### Embodiment 5

Embodiment 5 illustrates a flowchart of one piece of first signaling, as shown in FIG. 5. In FIG. 5, a first node U1 communicates with a second node N2 via a wireless link. It should be particularly noted that the order in this embodiment does not limit the signal transmission order and implementation order in the present application. In case of no conflict, the embodiments, sub-embodiments and dependent embodiments in Embodiment 5 can be applied to Embodiment 6; and on the contrary, in case of no conflict, any embodiment, sub-embodiment and dependent embodiment in Embodiment 6 can be applied to Embodiment 5.

For **a first node U1,** in step S10, first signaling is received; in step S11, target signaling is received; and in step S12, first DCI is received and a first channel is received.

For **a second node N2,** in step S20, first signaling is sent; in step S21, target signaling is sent; and in step S22, first DCI is sent and a first channel is sent.

In Embodiment 5, the first signaling is used for determining a first RE pool; the target signaling is used for triggering PDCCH detection in at least one PDCCH monitoring occasion, or canceling PDCCH detection in at least one PDCCH monitoring occasion; the first DCI is used for scheduling the first channel, wherein the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies the target RE set depends on the target signaling, and the target RE set comprises REs of the first RE pool in one of the at least one PDCCH monitoring occasion.

Typically, the first DCI is used for determining a first RE set, the first RE set is related to a second RE set, and the first channel occupies the second RE set; and resource mapping of the first channel to the second RE set is independent of the target signaling.

As one embodiment, the first DCI is used for indicating the first RE set.

As one sub-embodiment of this embodiment, the first DCI comprises an FDRA (Frequency Domain Resource Allocation) field and a TDRA (Time Domain Resource Allocation) field, the FDRA field is used for determining a frequency domain resource occupied by the first RE set, and the TDRA field is used for determining a time domain resource occupied by the first RE set.

As one embodiment, the first RE set comprises a positive integer number of REs, the positive integer being greater than 1.

As one embodiment, when the first RE set comprises the target RE set, the second RE set is composed of REs in the first RE set and outside the target RE set.

As one embodiment, when the first RE set does not comprise the target RE set, the second RE set is the first RE set.

As one embodiment, the meaning of "resource mapping of the first channel to the second RE set is independent of the target signaling" comprises: the first channel is preferentially mapped into the second RE set.

As one embodiment, the meaning of "resource mapping of the first channel to the second RE set is independent of the target signaling" comprises: a modulation symbol transmitted in the first channel is preferentially mapped into the second RE set.

As one embodiment, the meaning of "resource mapping of the first channel to the second RE set is independent of the target signaling" comprises: regardless of whether the target signaling is received, a position of a corresponding modulation symbol in the second RE set and transmitted in the first channel remains unchanged among all modulation symbols transmitted in the first channel.

As one embodiment, the meaning of "resource mapping of the first channel to the second RE set is independent of the target signaling" comprises: the first channel is used for transmitting Q1 modulation symbols, Q2 modulation symbols in the Q1 modulation symbols are mapped into the second RE set, and the Q2 modulation symbols are fixed in the Q1 modulation symbols; and the Q1 is a positive integer greater than 1, and the Q2 is a positive integer that is not greater than the Q1 and is greater than 1.

As one sub-embodiment of this embodiment, the Q1 modulation symbols are sequentially sorted, and the Q2 modulation symbols are the first Q2 modulation symbols in the Q1 modulation symbols.

As one sub-embodiment of this embodiment, the Q1 modulation symbols are sequentially sorted, and the Q2 modulation symbols are the last Q2 modulation symbols in the Q1 modulation symbols.

As one sub-embodiment of this embodiment, the Q1 modulation symbols are sequentially sorted, and the Q2 modulation symbols are Q2 modulation symbols corresponding to fixed Q2 positions of the Q1 modulation symbols.

As one sub-embodiment of this embodiment, the Q2 modulation symbols in the Q1 modulation symbols are sequentially mapped into the second RE set.

Typically, when the target signaling is used for triggering PDCCH detection in the at least one PDCCH monitoring occasion, the first channel does not occupy the target RE set; and when the target signaling is used for canceling PDCCH detection in the at least one PDCCH monitoring occasion, the first channel occupies the target RE set.

Typically, the first signaling is used for indicating K1 rate match schemes, the K1 being a positive integer greater than 1; a target rate match pattern is related to one of the K1 rate match schemes; the target rate match pattern is a first rate match pattern or a second rate match pattern, and whether the target rate match pattern is the first rate match pattern or the second rate match pattern depends on the target signaling; a time domain resource occupied by the target signaling is prior to a time domain resource occupied by the first channel; and the first rate match pattern is used for determining the target RE set, and the second rate match pattern is not used for determining the target RE set.

As one embodiment, the first signaling comprises a RateMatchPatternGroup1DCI-x-y IE in TS 38.331, x and y being positive integers.

As one embodiment, the first signaling comprises a RateMatchPatternGroup2DCI-x-y IE in TS 38.331, x and y being positive integers.

As one embodiment, the first signaling comprises a RateMatchPatternGroup1 IE in TS 38.331.

As one embodiment, the first signaling comprises a RateMatchPatternGroup2 IE in TS 38.331.

As one embodiment, the first signaling comprises a RateMatchPatternToAddModList IE in TS 38.331.

As one embodiment, the first signaling comprises one or more RateMatchPattern IE(s) in TS 38.331.

As one embodiment, the first signaling comprises one or more IE(s) included in a ServingCellConfig IE in TS 38.331.

As one embodiment, the first signaling comprises one or more field(s) included in a ServingCellConfig IE in TS 38.331.

As one embodiment, the first signaling comprises one or more IE(s) included in a ServingCellConfigCommon IE in TS 38.331.

As one embodiment, the first signaling comprises one or more field(s) included in a ServingCellConfigCommon IE in TS 38.331.

As one embodiment, the first signaling comprises one or more IE(s) included in a PDSCH-Config IE in TS 38.331.

As one embodiment, the first signaling comprises one or more field(s) included in a PDSCH-Config IE in TS 38.331.

As one embodiment, the first signaling comprises one or more IE(s) included in a PDSCH-Config-EnergySaving IE in TS 38.331.

As one embodiment, the first signaling comprises one or more field(s) included in a PDSCH-Config-EnergySaving IE in TS 38.331.

As one embodiment, the first signaling comprises one or more IE(s) included in a PDSCH-Config-ES IE in TS 38.331.

As one embodiment, the first signaling comprises one or more field(s) included in a PDSCH-Config-ES IE in TS 38.331.

As one embodiment, a name of RRC signaling bearing the first signaling comprises RateMatch.

As one embodiment, a name of RRC signaling bearing the first signaling comprises Pattern.

As one embodiment, a name of RRC signaling bearing the first signaling comprises Group.

As one embodiment, a name of RRC signaling bearing the first signaling comprises PDSCH.

As one embodiment, a name of RRC signaling bearing the first signaling comprises ServingCell.

As one embodiment, a name of RRC signaling bearing the first signaling comprises Config.

As one embodiment, a name of RRC signaling bearing the first signaling comprises EnergySaving.

As one embodiment, a name of RRC signaling bearing the first signaling comprises ES.

As one embodiment, the K1 is equal to 4.

As one embodiment, the target rate match pattern corresponds to one RateMatchPattern.

As one embodiment, the first rate match pattern corresponds to one RateMatchPattern.

As one embodiment, the second rate match pattern corresponds to one RateMatchPattern.

As one embodiment, the first rate match pattern and the second rate match pattern are different.

As one embodiment, any rate match scheme in the K1 rate match schemes at least comprises one Ratematch Pattern.

As one embodiment, the first rate match pattern is used for determining time-frequency positions of REs occupied by the target RE set.

As one embodiment, the first rate match pattern is used for determining time-frequency positions of REs occupied by the target RE set in a corresponding PDCCH monitoring occasion.

As one embodiment, the first rate match pattern is one rate match pattern included in one rate match scheme in the K1 rate match schemes.

As one embodiment, in addition to being used for determining time-frequency positions of REs occupied by the target RE set in a corresponding PDCCH monitoring occasion, the first rate match pattern is also used for determining time-frequency positions of REs occupied by a third RE set in a corresponding PDCCH monitoring occasion; and when the target rate match pattern is the first rate match pattern, the first channel does not occupy the target RE set and the third RE set.

As one embodiment, when the target signaling is used for triggering the PDCCH detection in the at least one PDCCH monitoring occasion, the target rate match pattern is the first rate match pattern; and when the target signaling is not used for triggering the PDCCH detection in the at least one PDCCH monitoring occasion, the target rate match pattern is the second rate match pattern.

As one embodiment, when the target signaling is used for canceling the PDCCH detection in the at least one PDCCH monitoring occasion, the target rate match pattern is the second rate match pattern; and when the target signaling is not used for canceling the PDCCH detection in the at least one PDCCH monitoring occasion, the target rate match pattern is the first rate match pattern.

As one embodiment, when the target signaling is used for triggering the PDCCH detection in the at least one PDCCH monitoring occasion, the target rate match pattern is the first rate match pattern; and when the target signaling is not used for canceling the PDCCH detection in the at least one PDCCH monitoring occasion, the target rate match pattern is the first rate match pattern.

As one embodiment, the first rate match pattern and the second rate match pattern are both used for determining a third RE set; and compared with the second rate match pattern, additional REs included in the first rate match pattern correspond to the target RE set.

As one embodiment, REs determined by the first rate match pattern comprise REs in the target RE set, and REs determined by the second rate match pattern do not comprise the REs in the target RE set.

Typically, the K1 rate match schemes correspond to K1 indexes, the target rate match pattern is related to a target rate match scheme in the K1 rate match schemes, the first signaling comprises a first parameter group and a second parameter group, and the first parameter group and the second parameter group are respectively used for determining the first rate match pattern and the second rate match pattern.

As one embodiment, the K1 indexes are respectively K1 non-negative integers.

As one embodiment, the K1 indexes are respectively K1 RateMatchPatternIds.

As one embodiment, the target rate match pattern is a rate match pattern included in one of the K1 rate match schemes.

As one embodiment, the first signaling comprises a RateMatchPattern IE in TS 38.331.

As one embodiment, the first parameter group included in the first signaling comprises a bitmaps field in the RateMatchPattern IE in TS 38.331.

As one embodiment, the first parameter group included in the first signaling comprises a controlResourceSet field in the RateMatchPattern IE in TS 38.331.

As one embodiment, the first parameter group included in the first signaling comprises a periodicityAndPattern field in the RateMatchPattern IE in TS 38.331.

As one embodiment, the first parameter group included in the first signaling comprises a resourceBlocks field in the RateMatchPattern IE in TS 38.331.

As one embodiment, the first parameter group included in the first signaling comprises a subcarrierSpacing field in the RateMatchPattern IE in TS 38.331.

As one embodiment, the first parameter group included in the first signaling comprises a symbolsInResourceBlock field in the RateMatchPattern IE in TS 38.331.

As one embodiment, the second parameter group included in the first signaling comprises a bitmaps field in the RateMatchPattern IE in TS 38.331.

As one embodiment, the second parameter group included in the first signaling comprises the controlResourceSet field in the RateMatchPattern IE in TS 38.331.

As one embodiment, the second parameter group included in the first signaling comprises the periodicityAndPattern field in the RateMatchPattern IE in TS 38.331.

As one embodiment, the second parameter group included in the first signaling comprises the resourceBlocks field in the RateMatchPattern IE in TS 38.331.

As one embodiment, the second parameter group included in the first signaling comprises the subcarrierSpacing field in the RateMatchPattern IE in TS 38.331.

As one embodiment, the second parameter group included in the first signaling comprises the symbolsInResourceBlock field in the RateMatchPattern IE in TS 38.331.

As one embodiment, the first rate match pattern and the second rate match pattern correspond to the same RateMatchPatternId.

Typically, the K1 rate match schemes correspond to K1 rate match pattern groups, the target rate match pattern is related to a target rate match pattern group in the K1 rate match pattern groups, and the target rate match pattern group comprises the first rate match pattern and the second rate match pattern; and the first rate match pattern and the second rate match pattern both correspond to a cell level, or the first rate match pattern and the second rate match pattern both correspond to a BWP level.

As one embodiment, the K1 rate match schemes are respectively K1 RateMatchPatternGroups.

As one embodiment, the target rate match pattern is a RateMatchPattern included in one RateMatchPatternGroup of the K1 RateMatchPatternGroups.

As one embodiment, the first rate match pattern and the second rate match pattern respectively correspond to two different RateMatchPatternIds.

As one embodiment, the target rate match pattern group comprises 4 rate match patterns, 2 of the 4 rate match patterns correspond to a cell level, and the other 2 rate match patterns correspond to a BWP level.

As one embodiment, the target rate match pattern group comprises 3 rate match patterns, 1 of the 3 rate match patterns corresponds to a cell level, and the other 2 rate match patterns correspond to a BWP level.

As one embodiment, the target rate match pattern group comprises 3 rate match patterns, 2 of the 3 rate match patterns corresponds to a cell level, and the other 1 rate match patterns correspond to a BWP level.

As one embodiment, the target rate match pattern group comprises 2 rate match patterns, and the 2 rate match patterns both correspond to a cell level.

As one embodiment, the target rate match pattern group comprises 2 rate match patterns, and the 2 rate match patterns both correspond to a BWP level.

Typically, the first DCI comprises a first field, the first field included in the first DCI is used for determining a target rate match scheme from the K1 rate match schemes, and the target rate match pattern is related to the target rate match scheme.

As one embodiment, the first field included in the first DCI is a Rate matching indicator.

As one embodiment, the first field included in the first DCI is used for indicating the target rate match scheme from the K1 rate match schemes.

As one embodiment, the target rate match pattern is one rate match pattern included in the target rate match scheme.

Typically, a first search space set is used for determining the first rate match pattern, and a second search space set is used for determining the second rate match pattern; and the first search space set is different from the second search space set.

As one embodiment, the first search space set and the second search space set respectively comprise one CSS set and one USS set.

As one embodiment, the first search space set and the second search space set respectively comprise one CSS and one USS.

Typically, the first search space set and the second search space set are respectively configured through first information and second information, and only the first information in the first information and the second information is legal system information; and the legal system information is NR (New Radio) system information, or the legal system information is NR system information recorded in 3GPP Release 15, or the legal system information is NR system information recorded in 3GPP Release 16, or the legal SIB1 is NR system information recorded in 3GPP Release 17.

As one embodiment, the second information is system information recorded in a protocol after 3GPP Release-17.

As one embodiment, the second information is system information recorded in a protocol of 3GPP Release-18.

As one embodiment, the first information comprises an MIB.

As one embodiment, the first information comprises an SIB.

As one embodiment, the first information comprises an SSB.

As one embodiment, the first information comprises a synchronization signal.

As one embodiment, the first information is transmitted through RRC signaling.

As one embodiment, the first information comprises a PDCCH-ConfigSIB1 IE in TS 38.331.

As one embodiment, a name of RRC signaling bearing the first information comprises PDCCH.

As one embodiment, a name of RRC signaling bearing the first information comprises Config.

As one embodiment, a name of RRC signaling bearing the first information comprises SIB.

As one embodiment, the first information is used for determining a time domain resource corresponding to the first search space set.

As one embodiment, the first information is used for determining a frequency domain resource corresponding to the first search space set.

As one embodiment, the first information is used for determining a CORESET associated with the first search space set.

As one embodiment, the first information is used for determining a PDCCH Monitoring Occasion corresponding to the first search space set.

As one embodiment, the first information is common to a cell.

As one embodiment, the first information is broadcast.

As one embodiment, the second information is transmitted through RRC signaling.

As one embodiment, the second information comprises a Searchspace IE in TS 38.331.

As one embodiment, a name of RRC signaling bearing the second information comprises Searchspace.

As one embodiment, a name of RRC signaling bearing the second information comprises R-18.

As one embodiment, a name of RRC signaling bearing the second information comprises Energy.

As one embodiment, a name of RRC signaling bearing the second information comprises Saving.

As one embodiment, the second information is UE-specific.

As one embodiment, the second information is unicast.

As one embodiment, the second information is used for determining a time domain resource corresponding to the second search space set.

As one embodiment, the second information is used for determining a frequency domain resource corresponding to the second search space set.

As one embodiment, the second information is used for determining a CORESET associated with the second search space set.

### Embodiment 6

Embodiment 6 illustrates a flowchart of one first signal, as shown in FIG. 6. In FIG. 6, a first node U3 communicates with a second node N4 via a wireless link. It should be particularly noted that the order in this embodiment does not limit the signal transmission order and implementation order in the present application. In case of no conflict, the embodiments, sub-embodiments and dependent embodiments in Embodiment 6 can be applied to Embodiment 5; and on the contrary, in case of no conflict, any embodiment, sub-embodiment and dependent embodiment in Embodiment 5 can be applied to Embodiment 6.

For **a first node U3,** in step S30, a first signal is sent.

For **a second node N4,** in step S40, the first signal is received.

In Embodiment 6, the first signal is used for indicating information of the first node, and the first signal is related to the target signaling.

As one embodiment, the first signal is used for triggering sending of the target signaling.

As one embodiment, the first signal is used for triggering monitoring of the target signaling.

As one embodiment, the first signal is used for triggering the receiving of the target signaling.

As one embodiment, the first signal is used for indicating the Capability of the first node.

As one embodiment, the first signal is used for indicating the Category of the first node.

As one embodiment, the first signal is used for indicating the Access Category corresponding to the first node.

As one embodiment, the first signal is used for indicating that the first node supports an energy saving mode.

As one embodiment, the first signal is used for indicating that the first node supports a Release version.

As one embodiment, the first signal comprises a UECapabilityInformation message in TS 38.331.

As one embodiment, the first signal is used for indicating that a sender of the target signaling enters an energy saving mode.

As one embodiment, the physical layer channel occupied by the first signal comprises a PUSCH (Physical Uplink Shared Channel).

As one embodiment, a transmission channel corresponding to the first signal comprises a UL-SCH (Uplink Shared Channel).

As one embodiment, the physical layer channel occupied by the first signal comprises a PUCCH (Physical Uplink Control Channel).

As one embodiment, the first signal comprises RRC signaling.

As one embodiment, the step S30 is after step S10 and prior to step S11 in Embodiment 5.

As one embodiment, the step S30 is prior to step S10 in Embodiment 5.

As one embodiment, the step S40 is after step S20 and prior to step S21 in Embodiment 5.

As one embodiment, the step S40 is prior to step S20 in Embodiment 5.

### Embodiment 7

Embodiment 7 illustrates a schematic diagram of one first RE pool, as shown in FIG. 7. In FIG. 7, the first RE pool comprises W1 RE sets, the W1 is a positive integer greater than 1, and any RE set in the W1 RE sets comprises at least one RE; and the target RE set is one of the W1 RE sets.

As one embodiment, the W1 is equal to the L1 in the present application.

As one embodiment, time domain resources occupied by any two RE sets in the W1 RE sets are orthogonal.

As one embodiment, the W1 RE sets respectively correspond to RE sets composed of REs occupied by corresponding one or more search space set(s) in W1 PDCCH monitoring occasions.

As one embodiment, the W1 RE sets respectively correspond to RE sets composed of REs occupied by corresponding one or more CORESET(s) in W1 PDCCH monitoring occasions.

### Embodiment 8

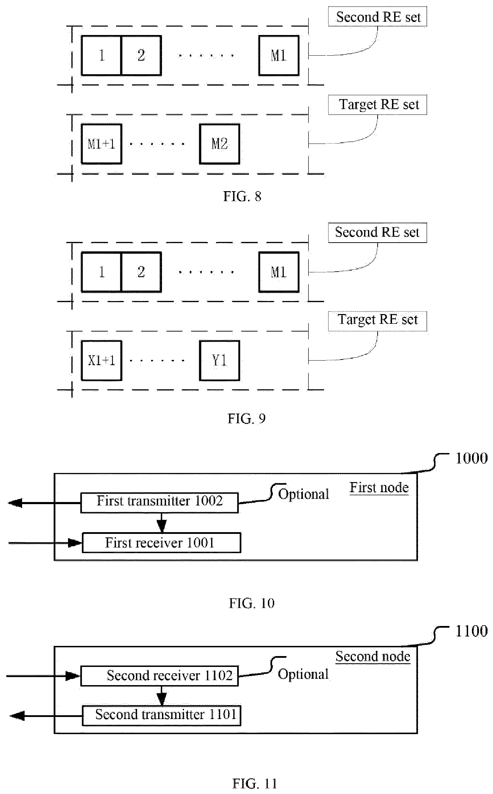

Embodiment 8 illustrates a schematic diagram of one second RE set, as shown in FIG. 8. In FIG. 8, the first RE set comprises the target RE set and the second RE set, and REs occupied by the target RE set and REs occupied by the second RE set are orthogonal. Each block in the figure represents one RE. A number in each RE represents a modulation symbol correspondingly mapped to the RE; the second RE set in the figure comprises M1 REs, and a modulation symbol #1 to a modulation symbol #M1 included in the first channel are mapped into the second RE set, and then a modulation symbol #(M1+1) to a modulation symbol #M2 included in the first channel are mapped into the target RE set; the first RE set comprises M2 REs in total; and the M1 and M2 are both positive integers greater than 1, and the M2 is greater than the M1.

As one embodiment, the number of modulation symbols corresponding to data transmitted in the first channel and scheduled by the first DCI is M2.

### Embodiment 9

Embodiment 9 illustrates a schematic diagram of one second RE set, as shown in FIG. 9. In FIG. 9, the first RE set corresponds to the second RE set, and the first RE set comprises the target RE set; and REs occupied by the target RE set and REs occupied by the second RE set are orthogonal. Each block in the figure represents one RE. A number in each RE represents a modulation symbol correspondingly mapped to the RE; the second RE set in the figure comprises M1 REs, and a modulation symbol #1 to a modulation symbol #M1 included in the first channel are mapped into the second RE set, and then a modulation symbol #(X1+1) to a modulation symbol #(X1+Y1) included in the first channel are mapped into the target RE set; the first RE set comprises M1 REs in total; the target RE set comprises Y1 REs; and the X1 is a positive integer greater than 1 and smaller than M1, and the (X1+Y1) is a positive integer greater than 1 and smaller than M1.

As one embodiment, the number of modulation symbols corresponding to data transmitted in the first channel and scheduled by the first DCI is M1.

As one embodiment, M1 modulation symbols mapped into the second RE set are continuous.

As one embodiment, Y1 modulation symbols mapped into the target RE set are continuous.

As one embodiment, the positions of Y1 modulation symbols mapped into the target RE set in the M1 modulation symbols included in the first channel are fixed.

As one embodiment, the positions of Y1 modulation symbols mapped into the target RE set in the M1 modulation symbols included in the first channel are predefined.

### Embodiment 10

Embodiment 10 illustrates one structural block diagram in one first node, as shown in FIG. 10. In FIG. 10, a first node 1000 comprises a first receiver 1001.

The first receiver 1001 receives first signaling, the first signaling being used for determining a first RE pool; receives target signaling, the target signaling being used for triggering PDCCH detection in at least one PDCCH monitoring occasion, or canceling PDCCH detection in at least one PDCCH monitoring occasion; and receives first DCI and receives a first channel.

In Embodiment 10, the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies the target RE set depends on the target signaling, and the target RE set comprises REs of the first RE pool in one of the at least one PDCCH monitoring occasion.

As one embodiment, the first DCI is used for determining a first RE set, the first RE set is related to the second RE set, and the first channel occupies the second RE set; and resource mapping of the first channel to the second RE set is independent of the target signaling.

As one embodiment, when the target signaling is used for triggering PDCCH detection in the at least one PDCCH monitoring occasion, the first channel does not occupy the target RE set; and when the target signaling is used for canceling PDCCH detection in the at least one PDCCH monitoring occasion, the first channel occupies the target RE set.

As one embodiment, the first signaling is used for indicating K1 rate match schemes, the K1 being a positive integer greater than 1; a target rate match pattern is related to one of the K1 rate match schemes; the target rate match pattern is a first rate match pattern or a second rate match pattern, and whether the target rate match pattern is the first rate match pattern or the second rate match pattern depends on the target signaling; a time domain resource occupied by the target signaling is prior to a time domain resource occupied by the first channel; and the first rate match pattern is used for determining the target RE set, and the second rate match pattern is not used for determining the target RE set.

As one embodiment, the K1 rate match schemes correspond to K1 indexes, the target rate match pattern is related to a target rate match scheme in the K1 rate match schemes, the first signaling comprises a first parameter group and a second parameter group, and the first parameter group and the second parameter group are respectively used for determining the first rate match pattern and the second rate match pattern.

As one embodiment, the K1 rate match schemes correspond to K1 rate match pattern groups, the target rate match pattern is related to a target rate match pattern group in the K1 rate match pattern groups, and the target rate match pattern group comprises the first rate match pattern and the second rate match pattern; and the first rate match pattern and the second rate match pattern both correspond to a cell level, or the first rate match pattern and the second rate match pattern both correspond to a BWP level.

As one embodiment, the first DCI comprises a first field, the first field included in the first DCI is used for determining a target rate match scheme from the K1 rate match schemes, and the target rate match pattern is related to the target rate match scheme.

As one embodiment, a first search space set is used for determining the first rate match pattern, and a second search space set is used for determining the second rate match pattern; and the first search space set is different from the second search space set.

As one embodiment, it comprises:
a first transmitter 1002 for sending a first signal,
wherein the first signal is used for indicating information of the first node, and the first signal is related to the target signaling.

As one embodiment, the first receiver 1001 comprises at least the first four of an antenna 452, a receiving device 454, a multi-antenna receiving processor 458, a receiving processor 456, and a controller/processor 459 in Embodiment 4.

As one embodiment, the first transmitter 1002 comprises at least the first four of the antenna 452, a transmitting device 454, a multi-antenna transmitting processor 457, a transmitting processor 468, and the controller/processor 459 in Embodiment 4.

### Embodiment 11

Embodiment 11 illustrates one structural block diagram in one second node, as shown in FIG. 11. In FIG. 11, a second node 1100 comprises a second transmitter 1101.

The second transmitter 1101 sends first signaling, the first signaling being used for determining a first RE pool; sends target signaling, the target signaling being used for triggering PDCCH detection in at least one PDCCH monitoring occasion, or canceling PDCCH detection in at least one PDCCH monitoring occasion; and sends first DCI and sends a first channel,

In Embodiment 11, the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies the target RE set depends on the target signaling, and the target RE set comprises REs of the first RE pool in one of the at least one PDCCH monitoring occasion.

As one embodiment, the first DCI is used for determining a first RE set, the first RE set is related to the second RE set, and the first channel occupies the second RE set; and resource mapping of the first channel to the second RE set is independent of the target signaling.

As one embodiment, when the target signaling is used for triggering PDCCH detection in the at least one PDCCH monitoring occasion, the first channel does not occupy the target RE set; and when the target signaling is used for canceling PDCCH detection in the at least one PDCCH monitoring occasion, the first channel occupies the target RE set.

As one embodiment, the first signaling is used for indicating K1 rate match schemes, the K1 being a positive integer greater than 1; a target rate match pattern is related to one of the K1 rate match schemes; the target rate match pattern is a first rate match pattern or a second rate match pattern, and whether the target rate match pattern is the first rate match pattern or the second rate match pattern depends on the target signaling; a time domain resource occupied by the target signaling is prior to a time domain resource occupied by the first channel; and the first rate match pattern is used for determining the target RE set, and the second rate match pattern is not used for determining the target RE set.

As one embodiment, the K1 rate match schemes correspond to K1 indexes, the target rate match pattern is related to a target rate match scheme in the K1 rate match schemes, the first signaling comprises a first parameter group and a second parameter group, and the first parameter group and the second parameter group are respectively used for determining the first rate match pattern and the second rate match pattern.

As one embodiment, the K1 rate match schemes correspond to K1 rate match pattern groups, the target rate match pattern is related to a target rate match pattern group in the K1 rate match pattern groups, and the target rate match pattern group comprises the first rate match pattern and the second rate match pattern; and the first rate match pattern and the second rate match pattern both correspond to a cell level, or the first rate match pattern and the second rate match pattern both correspond to a BWP level.

As one embodiment, the first DCI comprises a first field, the first field included in the first DCI is used for determining a target rate match scheme from the K1 rate match schemes, and the target rate match pattern is related to the target rate match scheme.

As one embodiment, a first search space set is used for determining the first rate match pattern, and a second search space set is used for determining the second rate match pattern; and the first search space set is different from the second search space set.

As one embodiment, it comprises:
a second receiver 1102 for receiving a first signal;
wherein the first signal is used for indicating information of the first node, and the first signal is related to the target signaling.

As one embodiment, the second transmitter 1101 comprises at least the first four of an antenna 420, a transmitting device 418, a multi-antenna transmitting processor 471, a transmitting processor 414, and a controller/processor 475 in Embodiment 4.

As one embodiment, the second receiver 1102 comprises at least the first four of the antenna 420, a receiving device 418, a multi-antenna receiving processor 472, a receiving processor 470, and the controller/processor 475 in Embodiment 4.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The first node in the present application includes, but is not limited to, mobile phones, tablet computers, laptops, network cards, low-power devices, eMTC devices, NB-IoT devices, vehicle-mounted communication devices, transportation tools, vehicles, RSUs (Road Side Units), aircrafts, airplanes, drones, remote-controlled airplanes and other wireless communication devices. The second node in the present application includes, but is not limited to, macrocellular base stations, microcellular base stations, small cell base stations, Femtocells, relay base stations, eNBs, gNBs, transmission and reception points (TRPs), GNSSs (Global Navigation Satellite Systems), relay satellites, satellite base stations, air base stations, RSUs, drones, test devices, transceiving apparatuses or signaling testers that simulate some functions of base stations, and other wireless communication devices.

Those skilled in the art should understand that the present invention may be implemented in other specified forms without departing from its core or basic features. Therefore, the embodiments disclosed at present should be regarded as descriptive rather than restrictive in any case. The scope of the invention is determined by the appended claims rather than the previous description, and all changes within their equivalent meanings and areas are deemed to be comprised therein.

## Claims

1. A first node used for wireless communication, comprising:
a first receiver for receiving first signaling, the first signaling being used for determining a first RE pool; receiving target signaling, the target signaling being used for triggering PDCCH detection in at least one PDCCH monitoring occasion, or canceling PDCCH detection in at least one PDCCH monitoring occasion; and receiving first DCI and receiving a first channel,
wherein the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies a target RE set depends on the target signaling, and the target RE set comprises REs of the first RE pool in one of the at least one PDCCH monitoring occasion.

2. The first node according to claim 1, wherein the first DCI is used for determining a first RE set, the first RE set is related to a second RE set, and the first channel occupies the second RE set; and resource mapping of the first channel to the second RE set is independent of the target signaling.

3. The first node according to claim 1 or 2, wherein when the target signaling is used for triggering PDCCH detection in the at least one PDCCH monitoring occasion, the first channel does not occupy the target RE set; and when the target signaling is used for canceling PDCCH detection in the at least one PDCCH monitoring occasion, the first channel occupies the target RE set.

4. The first node according to any one of claims 1 to 3, wherein the first signaling is used for indicating K1 rate match schemes, and the K1 is a positive integer greater than 1; a target rate match pattern is related to one of the K1 rate match schemes; the target rate match pattern is a first rate match pattern or a second rate match pattern, and whether the target rate match pattern is the first rate match pattern or the second rate match pattern depends on the target signaling; a time domain resource occupied by the target signaling is prior to a time domain resource occupied by the first channel; and the first rate match pattern is used for determining the target RE set, and the second rate match pattern is not used for determining the target RE set.

5. The first node according to claim 4, wherein the K1 rate match schemes correspond to K1 indexes, the target rate match pattern is related to a target rate match scheme in the K1 rate match schemes, the first signaling comprises a first parameter group and a second parameter group, and the first parameter group and the second parameter group are respectively used for determining the first rate match pattern and the second rate match pattern.

6. The first node according to claim 4, wherein the K1 rate match schemes correspond to K1 rate match pattern groups, the target rate match pattern is related to a target rate match pattern group in the K1 rate match pattern groups, and the target rate match pattern group comprises the first rate match pattern and the second rate match pattern; and the first rate match pattern and the second rate match pattern both correspond to a cell level, or the first rate match pattern and the second rate match pattern both correspond to a BWP level.

7. The first node according to any one of claims 4 to 6, wherein the first DCI comprises a first field, the first field included in the first DCI is used for determining a target rate match scheme from the K1 rate match schemes, and the target rate match pattern is related to the target rate match scheme.

8. The first node according to any one of claims 4 to 7, wherein a first search space set is used for determining the first rate match pattern, and a second search space set is used for determining the second rate match pattern; and the first search space set is different from the second search space set.

9. The first node according to any one of claims 1 to 8, comprising:
a first transmitter for sending a first signal,
wherein the first signal is used for indicating information of the first node, and the first signal is related to the target signaling.

10. A second node used for wireless communication, comprising:
a second transmitter for sending first signaling, the first signaling being used for determining a first RE pool; sending target signaling, the target signaling being used for triggering PDCCH detection in at least one PDCCH monitoring occasion, or canceling PDCCH detection in at least one PDCCH monitoring occasion; and sending first DCI and sending a first channel,
wherein the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies a target RE set depends on the target signaling, and the target RE set comprises REs of the first RE pool in one of the at least one PDCCH monitoring occasion.

11. A method used in a first node for wireless communication, comprising:
receiving first signaling, the first signaling being used for determining a first RE pool;
receiving target signaling, the target signaling being used for triggering PDCCH detection in at least one PDCCH monitoring occasion, or canceling PDCCH detection in at least one PDCCH monitoring occasion;
and receiving first DCI and receiving a first channel,
wherein the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies a target RE set depends on the target signaling, and the target RE set comprises REs of the first RE pool in one of the at least one PDCCH monitoring occasion.

12. A method used in a second node for wireless communication, comprising:
sending first signaling, the first signaling being used for determining a first RE pool;
sending target signaling, the target signaling being used for triggering PDCCH detection in at least one PDCCH monitoring occasion, or canceling PDCCH detection in at least one PDCCH monitoring occasion;
and sending first DCI and sending a first channel,
wherein the first DCI is used for scheduling the first channel; the first signaling comprises configuration signaling of at least one search space set, or the first signaling comprises a rate match scheme, or the first signaling comprises configuration signaling of at least one search space set and a rate match scheme simultaneously; the target signaling comprises at least one of DCI or MAC CE; the target signaling is common to a cell or is common to a UE group; and whether the first channel occupies a target RE set depends on the target signaling, and the target RE set comprises REs of the first RE pool in one of the at least one PDCCH monitoring occasion.
